# EUROPÄISCHE PATENTSCHRIFT

(11) **EP 2 864 031 B1**
(45) Veröffentlichungstag und Bekanntmachung des Hinweises auf die Patenterteilung: **14.12.2016**
(21) Anmeldenummer: 12729107.8
(22) Anmeldetag: 20.06.2012
(51) Int. Cl.: B01J 2/16

(54) **VORRICHTUNG MIT VARIABLEM MAßSTAB ZUM BEHANDELN VON PARTIKELFÖRMIGEM GUT**
DEVICE HAVING A VARIABLE SCALE FOR TREATING PARTICULATE MATERIAL
DISPOSITIF À ÉCHELLE VARIABLE POUR LE TRAITEMENT D'UN PRODUIT SOUS FORME DE PARTICULES

(43) Veröffentlichungstag der Anmeldung: 29.04.2015
(73) Patentinhaber: Romaco Innojet GmbH, 79585 Steinen (DE)
(72) Erfinder: Hüttlin, Herbert, 79585 Steinen (DE)
(74) Vertreter: Witte, Weller & Partner Patentanwälte mbB
(86) Internationale Anmeldenummer: PCT/EP2012/061833
(87) Internationale Veröffentlichungsnummer: WO 2013/189532

(56) Entgegenhaltungen:
- EP-A1- 2 055 373
- DE-A1- 10 309 989
- DE-A1- 19 904 147

## Beschreibung

Die Erfindung betrifft eine Vorrichtung zum Behandeln von partikelförmigem Gut, mit einer Prozesskammer, die einen Boden aufweist, der aus sich überlappenden Leitplatten aufgebaut ist, zwischen denen Spälte vorhanden sind, durch die Prozessluft etwa horizontal in die Prozesskammer einführbar ist, wobei die Leitplatten derart angeordnet sind, dass zwei entgegengesetzte, aufeinander zu gerichtete Strömungen an Prozessluft entstehen, die längs einer Aufbruchzone aufeinandertreffen, wobei in der Aufbruchzone dem Gut ein Behandlungsmedium über zumindest eine Sprühdüse aufsprühbar ist.

Eine derartige Vorrichtung ist aus der DE 199 04 147 A1 bekannt.

Ein im Querschnitt kreisrunder Boden der Prozesskammer besteht aus einander überlappenden, etwa ebenen Leitplatten, zwischen denen Spälte bzw. Schlitze gebildet sind, über die Prozessluft mit einer im Wesentlichen horizontalen Bewegungskomponente in die Prozesskammer einführbar ist. Die Schlitze sind dabei derart angeordnet, dass zwei entgegengesetzte, aufeinander zu gerichtete, im Wesentlichen horizontal verlaufende Strömungen an eingeführter Prozessluft entstehen, die längs einer Aufbruchzone aufeinanderprallen und in eine im Wesentlichen vertikal nach oben gerichtete Strömung umgelenkt werden. Die zu behandelnden Partikel werden von der Prozessluft entsprechend mitbewegt und fallen aufgrund der Schwerkraft, nachdem sie eine gewisse Höhe erreicht haben, nach links und rechts von der Aufbruchzone weg gerichtet wieder auf den Boden herab. Dort werden sie erneut von der Prozessluft in Richtung Aufbruchzone bewegt. In der Aufbruchzone sind Sprühdüsen angeordnet, um dem in der Aufbruchzone vertikal nach oben bewegten Gut ein Sprühmedium, beispielsweise eine Coatinglösung, aufzuerlegen. Die Prozessluft weist einen gewissen Wärmeinhalt auf, der für einen möglichst alsbaldigen Trocknungsprozess auf der Oberfläche des besprühten Gutteilchens sorgt, so dass dieses, wenn es wieder herabfällt und erneut auf die Aufbruchzone zu bewegt wird, schon möglichst weit abgetrocknet ist. Im nächsten Zyklus wird dann wieder eine Schicht an Behandlungsmedium aufgesprüht, so dass nach und nach eine sehr gleichmäßige und insbesondere sehr maßhaltige Überzugsschicht aufgebracht werden kann.

In der Weiterentwicklung der Technologie mit den Aufbruchzonen wurden Bodenkonstruktionen entwickelt, bei denen die Aufbruchzone kreisförmig verläuft. Wird der eintretenden Prozessluft noch eine umfängliche Bewegungskomponente auferlegt, entstehen in der Prozesskammer schwebende, sich drehende Produktringe, in denen die einzelnen Produktteilchen toroidal umgewälzt werden.

Dies ermöglicht, bei einer bestimmten Größe einer Apparatur und für eine gewisse Bandbreite an Gutteilchen hervorragende Behandlungsergebnisse zu erzielen. Mit solchen Apparaturen können insbesondere Gutteilchen >1,5 mm bis in den Bereich von Zentimetern, also in der Größenordnung von Tabletten oder oblongförmigen Kapseln, behandelt werden.

Ein Problem stellt bei solchen Apparaturen das so genannte Scaling-up dar. Daher werden zunächst in kleinen Apparaturen erste Versuche mit einem zu behandelnden Gut unternommen, wobei hier Batchgrößen im Bereich bis etwa 300 g üblich sind.

Anschließend wird in größeren Apparaturen im so genannten Labormaßstab mit Chargengrößen bis in den Bereich von einigen Kilogramm gearbeitet. Werden dort zufriedenstellende Ergebnisse erzielt, geht man eine Stufe weiter in den so genannten Pilotmaßstab, bei dem in nochmals größeren Apparaturen Chargengrößen im Bereich von bis zu 100 kg behandelt werden können.

Je nach Art des zu behandelnden Guts werden dann Anlagen im Produktionsmaßstab erstellt, die Chargengrößen bis in den Bereich von 1.000 kg ermöglichen.

In manchen technischen Gebieten, insbesondere im pharmazeutischen Bereich, wechseln aber nicht nur die Chargengrößen von Erzeugnis zu Erzeugnis, sondern auch die Größe und die Form des zu behandelnden Gutes.

Eine große Rolle spielt auch das Material, aus dem das Gut hergestellt ist, beispielsweise, ob dies gute Fließeigenschaften zeigt, ob es eine ausreichende Festigkeit aufweist oder ob es zu Ausbrüchen und Ablösungen neigt, was oftmals bei verpressten Tabletten vor dem Coaten der Fall ist.

Dann ist es notwendig, für jede Chargengröße und für bestimmte Guteigenschaften in langwierigen Untersuchungen und zahllosen Versuchen optimal darauf abgestimmte Apparaturgrößen zur Durchführung der Behandlung zu finden.

Aus der DE 103 09 989 A1 sind tunnelförmige Vorrichtungen zum Behandeln von partikelförmigem Gut bekannt, die eine langerstreckte Prozesskammer aufweisen, längs der das zu behandelnde Gut von einem Einlass zu einem Auslass bewegbar ist. Allerdings weist diese Vorrichtung eine ganz bestimmte Größe bzw. Länge auf, die mit entsprechenden Investitionskosten und einem entsprechenden Platzbedarf behaftet ist. Durch den kontinuierlichen Durchlaufbetrieb ist es möglich, bei an sich gleichbleibendem Gut an unterschiedliche Chargengrößen dadurch anzupassen, dass man die Anlage entsprechend länger oder kürzer im Durchlauf betreibt.

Es ist eine Aufgabe der vorliegenden Erfindung, eine Vorrichtung zu schaffen, die aus sich heraus für die Behandlung einer relativ großen Bandbreite an unterschiedlichem Gut mit unterschiedlichen Eigenschaften geeignet ist, die aber zugleich flexibel an unterschiedliche Chargengrößen anpassbar ist, ohne voluminöse Apparaturen schaffen zu müssen, die vom Prinzip her für viel größere Chargengrößen vorgesehen sind.

Erfindungsgemäß wird die Aufgabe dadurch gelöst, dass die Vorrichtung aus einzelnen Leistungsmodulen etwa gleicher Bauart und Größe zusammengesetzt ist, wobei die Leistungsmodule einen rechteckigen Querschnitt aufweisen und über zumindest eine offene Rechteckseite zu einer Reihe aneinanderfügbar sind, wobei sich die Längserstreckungen der jeweiligen Aufbruchzonen in Richtung der Reihe aneinanderfügen.

Der Begriff Leistungsmodul im Sinne der vorliegenden Erfindung bedeutet, dass dieses Leistungsmodul mit den konstruktiven Vorgaben eines Bodens mit sich überlappenden Leitplatten und der Aufbruchzone in der Lage ist, eine relativ große Bandbreite an unterschiedlichen Gutteilchen mit unterschiedlichen Eigenschaften bis zu einer bestimmten Chargengröße hervorragend zu behandeln. Solche Erfahrungen liegen bei dem Anmelder beispielsweise im Zusammenhang mit den eingangs erwähnten Apparaturen mit rundem Querschnitt und der Aufbruchzone vor. Mit anderen Worten "leistet" ein solches Leistungsmodul dieser Bauart und einer bestimmten Größe, ein Gut optimal zu fluidisieren und zu bewegen, und das bei einer ganz bestimmten Schütthöhe in der Prozesskammer. Ein solches Leistungsmodul kann zum Beispiel Gutteilchen verschiedenster Form, Größe und Dichte, unter anderem auch Feststoff-Förmlinge aus der Pharmazie, der technischen Chemie, dem Lebensmittelbereich oder dem Süßwarenbereich behandeln. In der Lebensmittelbranche sind dies körnige Güter wie Kaffeebohnen oder dergleichen, in der Süßwarenindustrie Bonbons oder Schokolinsen etc.

Durch Vorsehen eines etwa rechteckigen Querschnittes kann sehr flexibel an die Bedürfnisse unterschiedlicher Kunden dadurch angepasst werden, dass einzelne Leistungsmodule über eine offene Rechteckseite zu einer Reihe aneinanderfügbar sind, wobei sich die Längserstreckungen der jeweiligen Aufbruchzone in Richtung der Reihe erstrecken und aneinanderfügen.

Im einfachsten Fall werden zwei solche Leistungsmodule über eine jeweils offene Seite zu einer Vorrichtung zusammengesetzt. In jedem einzelnen Leistungsmodul bleibt die Behandlungscharakteristik etwa gleich, so dass ohne aufwändige konstruktive Anpassungen Chargengrößen im Faktor 2 bearbeitet werden können.

Werden drei solche Leistungsmodule zusammengesetzt, so weist das mittlere zwei gegenüberliegende offene Seiten auf, an die jeweils ein mit einer offenen Seite versehenes Leistungsmodul angesetzt wird.

Dementsprechend können auch vier, fünf, sechs oder mehr solcher Leistungsmodule aneinandergereiht werden.

Die Prozessluftführung, somit auch die Temperatur- und Feuchtigkeitsführung sowie die Befüll- und Entleercharakteristik kann im Prinzip unverändert bleiben, man muss lediglich eine entsprechende Anzahl an Leistungsmodulen aneinanderreihen. Es wurde in zahlreichen Versuchen festgestellt, dass bei einer großen Anzahl an unterschiedlichen Produktcharakteristika und Größen durch die Aneinanderreihung von mehreren Leistungsmodulen ein gleichbleibend gutes Behandlungsergebnis bei zunehmender Chargengröße erzielt werden kann.

Dadurch kann durch ein Baukastensystem, das mehrere Leistungsmodule beinhaltet, flexibel ein Scaling-up durchgeführt werden, ohne dabei die Strömungs-/Bewegungscharakteristik stark zu verändern, um somit ein gleichbleibendes Behandlungsergebnis bei unterschiedlichen Chargengrößen sicherzustellen.

In einer weiteren Ausgestaltung der Erfindung ist zwischen zwei benachbarte Leistungsmodule eine Trennwand einführbar, die die aneinandergefügten Leistungsmodule zu Untereinheiten an Leistungsmodulen auftrennt.

Diese Ausgestaltung erhöht nun die Flexibilität einer solchen Vorrichtung dahingehend, dass nicht nur ein Scaling-up einfach möglich ist, sondern auch entsprechend kleinere Chargen verarbeitet werden können.

Geht man von dem einfachsten Beispiel aus, dass zwei Leistungsmodule miteinander gekoppelt sind, kann durch einfaches Einschieben einer Trennwand nur oder jeweils in einem der beiden Leistungsmodule eine Behandlung durchgeführt werden, wenn eine entsprechend kleinere Chargengröße verarbeitet werden soll.

Bei drei zusammengesetzten Modulen kann eine solche Trennwand beispielsweise zwischen das erste und zweite Leistungsmodul eingesetzt werden. Durch diese einfache Maßnahme steht eine Vorrichtung für drei verschiedene Chargengrößen zur Verfügung, nämlich die Chargengrößen, die durch drei Leistungsmodule zugleich behandelt werden können, Chargengrößen, die durch zwei Leistungsmodule optimal behandelt werden können, oder auch Chargengrößen, die durch ein einziges Leistungsmodul optimal behandelt werden können. Das zeigt besonders eindrucksvoll die Flexibilität der Anlage, nicht nur im Sinne eines Scaling-up, sondern auch in einem Scaling-down.

Das Zwischenschieben einer Trennwand ist eine einfach zu bewerkstelligende Maßnahme, die auch durch einfache Mittel durchgeführt werden kann, indem beispielsweise von oben oder von der Seite lediglich eine Wand zwischen die aneinandergefügten Leistungsmodule eingeschoben wird.

In einer weiteren Ausgestaltung der Erfindung weist jedes Leistungsmodul ein eigenes Gebläse auf, durch das die Prozessluft durch den Boden in die Prozesskammer einführbar ist.

Diese Maßnahme hat den Vorteil, dass die Prozessluftführung durch die Prozesskammer eines Leistungsmoduls jeweils individuell bzw. optimal einstellbar ist.

In einer weiteren Ausgestaltung ist das Gebläse als Axialgebläse aufgebaut, dessen Ventilator unterhalb des Bodens im Leistungsmodul angeordnet ist.

Dies eröffnet vorteilhafterweise eine unmittelbare Steuerung und verlustarme Zuführung der Prozessluft an die Unterseite des Bodens.

In einer weiteren Ausgestaltung der Erfindung ist jedes Leistungsmodul an einer um 90° zur offenen Seite versetzten Seite mit einer Filteranordnung versehen.

Diese Maßnahme hat den Vorteil, dass in einem Leistungsmodul selbst von der Prozessluft mitgerissene Gutteilchen oder auch Ausbrüche davon zurückgehalten und gegebenenfalls einem Behandlungsprozess wieder zugeführt werden können.

In einer weiteren Ausgestaltung der Erfindung ist jedes Leistungsmodul mit einem bewegbaren Deckel versehen, der einen oberen Abschluss der Prozesskammer darstellt.

Diese Maßnahme hat den Vorteil, dass durch den Deckel die Prozesskammer geöffnet werden kann, so dass entsprechende Manipulationen, wie Befüllen, Reinigen oder dergleichen, durch diese Öffnung durchgeführt werden können. Ist der Deckel aus Glas gefertigt, kann durch diesen der Behandlungsverlauf in der Prozesskammer visuell beobachtet werden.

In einer weiteren Ausgestaltung der Erfindung wird von der Prozesskammer abströmende Prozessluft durch den Deckel seitlich und nach unten gerichtet in die Filteranordnung umgelenkt.

Diese Maßnahme hat den Vorteil, dass der Deckel zugleich als Umlenkvorrichtung und Führung der Prozessluft zu der Filteranordnung dient.

In einer weiteren Ausgestaltung der Erfindung ist unter dem Boden zumindest ein Wärmetauscher angeordnet.

Diese Maßnahme hat den Vorteil, dass über die Wärmetauscher eine verlustarme und effektive Temperaturführung bewerkstelligt werden kann.

So kann ein Wärmetauscher als eine Art Kühlfalle ausgebildet sein, um von der Prozessluft mitgerissene Feuchtigkeit auszukondensieren. Der Wärmetauscher kann auch dazu herangezogen werden, die vom Gebläse der Unterseite des Bodens zugeführte Prozessluft rasch auf eine optimale Temperatur zu bringen.

In einer weiteren Ausgestaltung der Erfindung ist in der Aufbruchzone zumindest abschnittsweise eine vertikal nach oben sprühende Linear-Sprühdüse angeordnet.

Diese Maßnahme hat den Vorteil, dass durch eine solche Düsenausgestaltung in der Aufbruchzone das nach oben umgelenkte Gut an einer günstigen Stelle über eine gewisse Länge mit dem Behandlungsmedium besprüht werden kann. Nach dem Hochsteigen in der Aufbruchzone fallen die Teilchen beidseits der Aufbruchzone wieder herab, so dass genügend Raum und Zeit zur Verfügung steht, das in der Aufbruchzone aufgesprühte Medium abtrocknen zu lassen.

In einer weiteren Ausgestaltung ist in ein Leistungsmodul zumindest eine Wand einbringbar, die die Prozesskammer dieses einen Leistungsmoduls in zumindest zwei Untereinheiten aufteilt.

Diese Maßnahme hat den erheblichen Vorteil, dass ein Leistungsmodul durch diese Wand in kleinere Untereinheiten aufgeteilt werden kann, um beispielsweise erste Versuche mit einem bestimmten Gut im Mini- oder Labormaßstab durchzuführen.

Sinnvollerweise weist ein Leistungsmodul eine solche Größe auf, dass darin ein bestimmtes Batch behandelt werden kann, das in dieser Branche, in der das Leistungsmodul eingesetzt wird, häufig vorkommt. Soll ein neuartiges Gut behandelt werden, können durch Unterteilen der Prozesskammer eines Leistungsmoduls in zumindest zwei Untereinheiten entsprechende Versuche im Kleinst- oder Labormaßstab durchgeführt werden. Hat beispielsweise ein Leistungsmodul die Fähigkeit, ein Gut von etwa 30 Schüttlitern zu bearbeiten, so kann dieses, je nachdem, wie die Wand eingesetzt wird, in zwei Untereinheiten von jeweils 15 Schüttlitern oder auch in zwei Untereinheiten von 10 und 20 Schüttlitern aufgeteilt werden. Dann ist es nicht notwendig, neben der kleinsten Leistungsmoduleinheit noch kleinere Einheiten vorzusehen, um solche Laborversuche durchzuführen. Sinnvollerweise wird diese Möglichkeit dann bei einem Leistungsmodul am Ende oder am Anfang einer Reihe an zusammengefügten Leistungsmodulen vorgesehen sein. Dies zeigt besonders eindrucksvoll die Flexibilität der Vorrichtung bezüglich der Chargengrößen.

In einer weiteren Ausgestaltung der Erfindung ist die Linear-Sprühdüse in einzelne Abschnitte aufgeteilt, um die durch die eingebrachte Wand entstehenden Untereinheiten mit Sprühmedium versorgen.

Diese Maßnahme hat den Vorteil, dass im Zusammenhang mit dem Vorsehen von Untereinheiten auch dementsprechend die Linear-Sprühdüse unterteilt ist, so dass dann variabel die jeweiligen Untereinheiten mit einem Abschnitt der Linear-Sprühdüse mit Sprühmedium versorgt werden können.

In einer weiteren Ausgestaltung der Erfindung sind zwei Leistungsmodule, quer zur Richtung der Aneinanderfügung, zu einem Doppel-Leistungsmodul zusammengesetzt.

Diese Maßnahme hat den Vorteil, dass anstatt oder zusätzlich zu der Aneinanderfügung entlang der Reihe zunächst zwei Leistungsmodule quer zur Richtung dieser Aneinanderfügung zu einem Doppel-Leistungsmodul zusammengesetzt werden können. Diese Doppel-Leistungsmodule können dann in Richtung der Aneinanderfügung untereinander aneinandergesetzt werden, so dass dann eine Reihe entsteht, deren Kapazität schon ausgänglich doppelt so groß ist wie die eines einzigen Leistungsmoduls.

Mit anderen Worten erfolgt ein Scaling-up nicht in den Schritten 1, 2, 3, 4, 5 aneinandergereihter Leistungsmodule, sondern in den Schritten 2, 4, 6, 8, 10 etc.

In einer weiteren Ausgestaltung sind Leistungsmodule mit einer Filteranordnung an einer Seite so zu einem Doppel-Leistungsmodul zusammengesetzt, dass die Filteranordnungen an sich gegenüberliegenden Seiten, quer zur Reihenordnung, zu liegen kommen.

Diese Maßnahme hat den Vorteil, dass bei Aneinanderreihen mehrerer solcher Doppel-Leistungsmodule sich die Filteranordnungen jeweils längs der Außenseite des entstehenden langerstreckten Rechteckkörpers befinden und somit für Wechselvorgänge einfach zugänglich sind.

In einer weiteren Ausgestaltung der Erfindung weist ein Leistungsmodul eine Prozesskammer mit einem etwa quadratischen Querschnitt auf, in dem mittig die Aufbruchzone verläuft.

Diese Geometrie hat den Vorteil, dass links und rechts der Aufbruchzone dem jeweils herabfallenden Gut ein gleicher Raum zur Verfügung steht, was einem gleichmäßigen Behandlungsergebnis äußerst zuträglich ist.

In weiteren Ausgestaltungen weist die Prozesskammer eine Querschnittsbreite im Größenbereich von 300 bis 700 mm, insbesondere im Bereich von 400 bis 600 mm, und höchst vorzugsweise eine Breite von etwa 500 mm auf.

Parallel dazu ist vorteilhaft, wenn die Prozesskammer eine statische Produktfüllhöhe im Bereich von 100 bis 150 mm, von etwa 110 bis 140 mm und höchst vorzugsweise im Bereich von etwa 135 mm aufweist.

Zahlreiche Versuche mit in den verschiedenen Branchen zur Behandlung vorgesehenen Gutteilchen, die sich in einem Größenbereich von 1,5 mm bis in den Zentimeterbereich bewegen, haben gezeigt, dass diese in Prozesskammern in diesem Querschnittsbereich sehr gut und sehr gleichmäßig behandelt werden können. Ein einziges Leistungsmodul zeigt schon eine relativ große Flexibilität gegenüber unterschiedlichen Gutteilchen, insbesondere mit unterschiedlichen Größen und unterschiedlichen Fließeigenschaften von Gutteilchen. Das liegt bei einem Leistungsmodul bei etwa 33,5 Schüttliter. In einer Reihenanordnung von drei einzelnen Leistungsmodulen sind damit etwa 100 kg, bei sechs Leistungsmodulen ca. 200 kg Chargengrößen möglich. Wird schon von vornherein mit Doppel-Leistungsmodulen gearbeitet, erhöht sich die Chargengröße entsprechend. Durch Einstecken der entsprechenden schnell wechselbaren Trennwand im Rastermaß der Längserstreckung eines Leistungsmoduls, beispielsweise von 500 mm, können dann variabel Chargengrößen bearbeitet werden, die das Mehrfache einer "Basisschüttmenge", von beispielsweise 33,5 Schüttlitern, eines einzelnen Leistungsmoduls darstellen.

In einer weiteren Ausgestaltung der Erfindung weist die Linearsprühdüse sprühaktive Längenabschnitte von 50 bis 500 mm auf.

Es wurde in Versuchen festgestellt, dass solche aktiven Sprühlängenabschnitte ausreichen, um in einem Leistungsmodul optimale Behandlungsergebnisse erzielen zu können.

Kurze Abschnitte eröffnen auch die Möglichkeit, in einem Leistungsmodul durch Einsetzen von Wänden die entsprechenden Untereinheiten in einem Basisleistungsmodul herzustellen, die dann durch die einzelnen kurzen Abschnitte mit Sprühmedium versorgt werden können.

In einer weiteren Ausgestaltung der Erfindung sind im Boden Luftleitelemente angeordnet, die der durch den Boden strömenden Prozessluft eine Bewegungskomponente in Richtung der Reihe der aneinanderfügbaren Leistungsmodule auferlegen.

Diese Maßnahme hat den Vorteil, dass neben der quer zur Längserstreckung der Aufbruchzone gerichteten Hauptumwälzbewegung noch eine zusätzliche axiale Bewegungskomponente auferlegt wird, wenn das gewünscht ist.

In einer weiteren Ausgestaltung der Erfindung sind die Leitelemente verstellbar, so dass durch diese in der Prozessluft eine veränderbare Bewegungskomponente in Richtung der Reihe auferlegbar ist.

Diese Maßnahme hat den Vorteil, dass sehr flexibel auf unterschiedliche Gutgegebenheiten reagiert werden kann.

In einer weiteren Ausgestaltung der Erfindung sind die Leitelemente derart verstellbar, dass auf einer Seite einer Aufbruchzone der Prozessluft eine Bewegungskomponente in einer Richtung der Reihe auflegbar ist, auf der anderen Seite der Aufbruchzone jedoch in entgegengesetzter Richtung die Bewegungskomponente auflegbar ist.

Schaut man von oben auf den Boden eines oder mehrerer aneinandergereihter solcher Leistungsmodule, so bewegt sich durch diese Ausgestaltung auf einer Seite der Aufbruchzone das Gut in einer Richtung längs der Aneinanderreihung beispielsweise von links nach rechts, auf der gegenüberliegenden Seite aber von rechts nach links.

Irgendwann treffen diese bewegten Teile auf eine endseitige Stirnwand eines endseitigen Leistungsmoduls. In einer Richtung gesehen werden also nach und nach Gutteilchen in Richtung dieser Wand geschoben und dort verdichtet.

Da auf der gegenüberliegenden Seite die Bewegungskomponente entgegengesetzt ist, herrscht auf der anderen Seite der Aufbruchzone an dieser Wand eine Gutverarmung.

Dies führt dazu, dass von der einen Seite mit der Gutverdichtung Gutteilchen über die Aufbruchzone quer hinweg in die verarmte Zone bewegt und der anderen Hälfte der Gutteilchen zugeführt werden.

Am gegenüberliegenden Ende der Reihe findet dann der umgekehrte Prozess statt, das heißt, die dieser Hälfte zugeführten Gutteilchen werden am gegenüberliegenden Ende aufgestaut und verdichtet und treten dann in die andere Guthälfte über die Aufbruchzone über. Betrachtet man nun, wie zuvor erwähnt, den Vorgang von oben, so erkennt man, dass dem gesamten Gutstrom eine umfänglich umlaufende Bewegungskomponente mit auferlegt wird, die, je nachdem, wie viele Leistungsmodule aneinandergekettet sind, mehr oder weniger länglich rechteckförmig ausgebildet ist.

Diese zusätzliche Bewegungskomponente trägt nochmals erheblich zu einem gleichmäßigen Behandlungsergebnis bei. Es ist eine gewisse Annäherung an die Ringgeometrie bei Prozesskammern mit kreisförmigem Querschnitt gegeben, wobei eben keine exakte Ringgeometrie sondern eine entsprechend umlaufende rechteckförmige Bewegung erscheint, die sich mit der Bewegung in Richtung auf die Aufbruchzone zu gerichtet und dem vertikal nach oben Absteigen und dem Wiederherabfallen der Gutteilchen überlagert. Insgesamt gesehen ist die daraus resultierende Bewegung einem besseren Behandlungsergebnis sehr zuträglich.

In einer weiteren Ausgestaltung der Erfindung sind die Leitelemente als zwischen den Leitplatten angeordnete, um eine Hochachse verschwenkbare Leitfinger ausgebildet, die mit einem gemeinsamen Stellelement verbunden sind, dessen Verschiebung eine gemeinsame Verschwenkung der Leitfinger bewirkt.

Dadurch ist es möglich, durch die zahllosen Leitfinger der Prozessluft gewünschte Bewegungskomponenten zusätzlich aufzuerlegen, wobei durch das gemeinsame Stellelement diese Verschiebung jeweils synchron verläuft.

In einer weiteren Ausgestaltung der Erfindung sind die Leitelemente auf der einen Seite der Aufbruchzone unabhängig von den Leitelementen der gegenüberliegenden Seite verstellbar.

Diese Maßnahme hat den Vorteil, dass dadurch zahlreiche Vorgänge zur Beeinflussung der Prozessluft möglich sind. Sind die Leitelemente so verstellt, dass die zuvor beschriebenen gegenläufigen Strömungen in Richtung der Zusammenfügung gesehen entstehen, so resultiert der zuvor beschriebene "Kreislauf".

Es ist aber auch möglich, die Leitelemente exakt so auszurichten, dass die Gutteilchen quasi rechtwinklig auf die Aufbruchzone zu bewegt werden sollen, wenn das erwünscht ist. Dies eröffnet auch die Möglichkeit, die Leitelemente alle in dieselbe Richtung auszurichten, so dass nach und nach das gesamte Gut von einem Ende der Vorrichtung zum anderen bewegt wird. Das eröffnet die Möglichkeit, die zusammengefügten Leistungsmodule entweder im Durchlaufbetrieb arbeiten zu lassen, oder am Ende eines Behandlungsvorgangs die Leitelemente so auszurichten, so dass dadurch ein Entleeren in einer Richtung möglich ist. Auch dies zeigt die hochflexible Ausgestaltung zur Anpassung an unterschiedliche Guteigenschaften, hier insbesondere Fließeigenschaften.

In einer weiteren Ausgestaltung der Erfindung ist die Steuerung der Verstellbarkeit der Leitelemente derart ausgebildet, dass beim Aneinanderreihen benachbarter Leistungsmodule die Steuerungen miteinander koppelbar sind.

Diese Maßnahme hat den Vorteil, dass beim Aneinanderfügen durch entsprechende Kupplungsmerkmale die Steuerungen gekoppelt werden, so dass dann die gewünschte Ausrichtung der Leitelemente bei mehreren aneinandergefügten Leistungsmodulen durch die Kopplung exakt synchron durchgeführt werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand der beiliegenden Zeichnungen im Zusammenhang mit einigen ausgewählten Ausführungsbeispielen näher beschrieben und erläutert. Es zeigen:
- Fig. 1: einen Vertikalschnitt eines Leistungsmoduls;
- Fig. 2: den Vertikalschnitt von Fig. 1 mit Strömungspfeilen zur Erläuterung der bewegten Medien und Gutteilchen in einem solchen Leistungsmodul;
- Fig. 3: einen Schnitt längs der Linie III-III in Fig. 1;
- Fig. 4a bis 4d: der Fig. 3 entsprechende Schnitte mit unterschiedlicher Anzahl an längs einer Richtung einer Aneinanderreihung zusammengefügter Leistungsmodule, nämlich zwei, vier und sechs;
- Fig. 5: einen der Darstellung von Fig. 3 entsprechenden Schnitt einer Reihe von Leistungsmodulen, wie in Fig. 1 dargestellt, wobei am oberen Ende Schnitte längs der Linien Va, Vb und Vc von Fig. 1 dargestellt sind;
- Fig. 6: eine stark schematisierte Draufsicht auf ein Leistungsmodul von Fig. 1, wobei die Bewegungsrichtung der Gutteilchen in einem Leistungsmodul gezeigt ist;
- Fig. 7: eine der Fig. 6 entsprechende Darstellung mit zwei aneinandergefügten Leistungsmodulen;
- Fig. 8: ein Detail im Vertikalschnitt eines Bodens eines Leistungsmoduls;
- Fig. 9: eine teilweise gebrochene Draufsicht auf Leitelemente, die im Boden angeordnet sind;
- Fig. 10: eine teilweise aufgebrochene Draufsicht auf eine Vielzahl an Leitelementen in einem bestimmten Verstellzustand,
- Fig. 11: eine der Draufsicht von Fig. 10 entsprechende Draufsicht mit andersartig verstellten Leitelementen;
- Fig. 12: eine perspektivische, teilweise Ansicht einer Vorrichtung mit sechs Leistungsmodulen;
- Fig. 12a: ein Detail aus Fig. 12;
- Fig. 13: die Vorrichtung von Fig. 12 im fertigen Zustand;
- Fig. 14: eine der Darstellung von Fig. 1 vergleichbare Vertikalschnittdarstellung eines Doppel-Leistungsmoduls, das aus zwei Leistungsmodulen von Fig. 1 spiegelbildlich längs der Aufbruchzone zusammengesetzt ist; und
- Fig. 15: eine der Darstellung von Fig. 3 entsprechende Draufsicht auf eine Reihe von sechs aneinandergefügten Doppel-Leistungsmodulen.

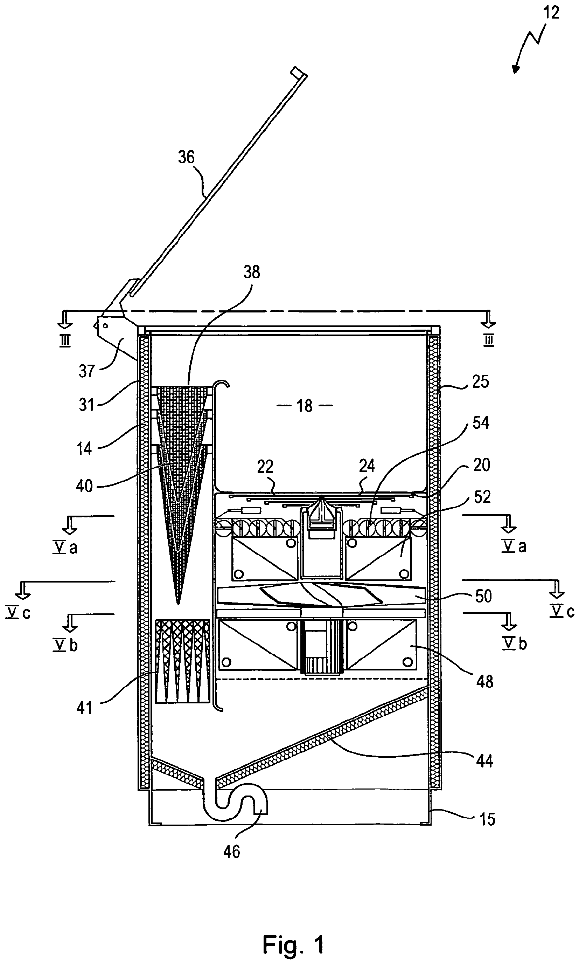

In den Fig. 1 bis 13 ist ein erstes Ausführungsbeispiel einer erfindungsgemäßen Vorrichtung dargestellt, die in ihrer Gesamtheit mit der Bezugsziffer 10 bezeichnet ist.

Die Vorrichtung 10 setzt sich aus einzelnen Leistungsmodulen 12 zusammen, wobei zunächst zum grundsätzlichen Verständnis der Aufbau eines einzigen Leistungsmoduls 12, wie es in den Fig. 1 bis 4a dargestellt ist, beschrieben werden soll.

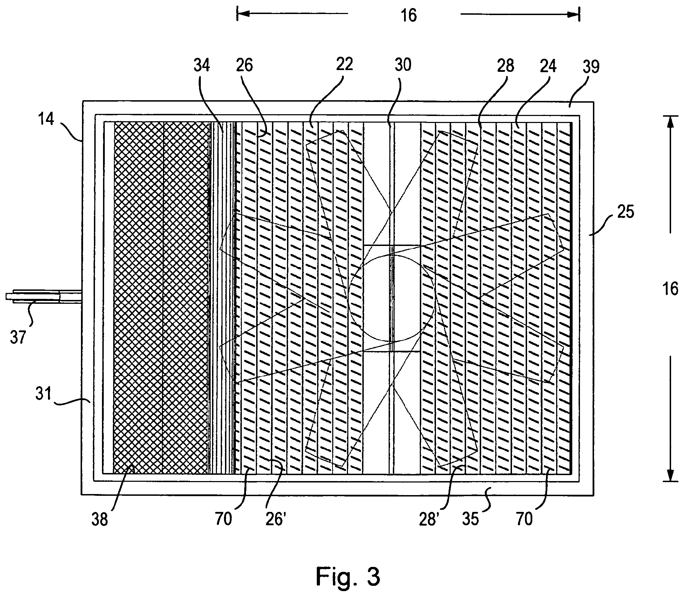

Jedes Leistungsmodul 12 weist ein doppelwandiges, isoliertes Gehäuse 14 aus Edelstahlblech auf, dessen Querschnitt 16, wie er in Fig. 3 gezeigt ist, etwa rechteckförmig ist. Die längere Rechteckseite hat eine Länge von etwa 700 mm, die kürzere eine Länge von etwa 500 mm.

Die Höhe des Gehäuses 14 beträgt etwa 1.300 mm.

Das Gehäuse 14 ist am unteren Ende über einen Sockel 15 verschlossen. Am oberen Ende ist das Gehäuse 14 offen und durch einen Deckel 36 aus durchsichtigem Industrieglas abgedeckt. Der Deckel 36 ist über eine Halterung 37 aufklappbar an einer Rückwand 31 des Gehäuses 14 angebracht.

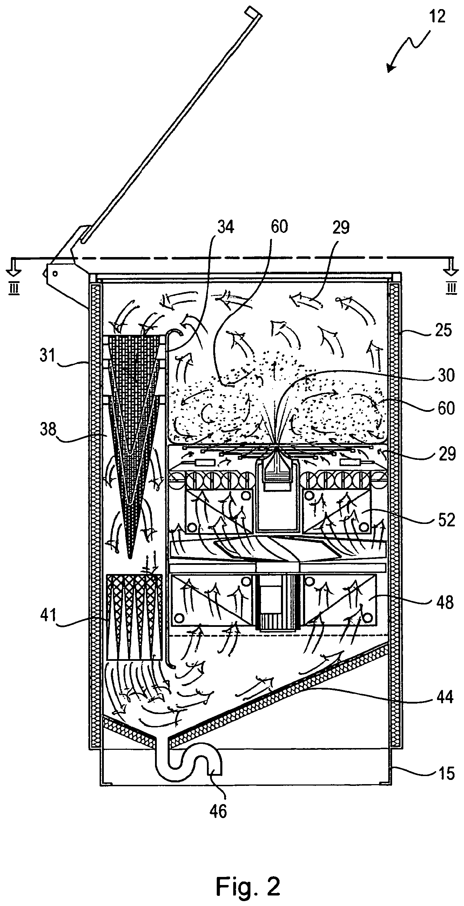

Im Inneren des Gehäuses 14 ist eine Prozesskammer 18 vorhanden, deren Querschnittsmaß 16, wie insbesondere aus Fig. 3 zu ersehen ist, quadratisch ist und die Maße 500 mm x 500 mm aufweist. Am unteren Ende ist die Prozesskammer 18 mit einem Boden 20 versehen, der aus zwei Reihen an übereinandergelegten, sich teilweise überlappenden Serien an Leitplatten 22 und Leitplatten 24 zusammengesetzt ist. Insbesondere aus der Draufsicht von Fig. 3 ist ersichtlich, dass die Serie an Leitplatten 22 aus einer Reihe an übereinandergelegten, sich teilweise überlappenden Blechstreifen ausgebildet ist, so dass zwischen einem höherliegenden Streifen und einem darunterliegenden Streifen jeweils Spälte 26, 26' ausgebildet sind, durch die Prozessluft 29 hindurchtreten kann, wie das in Fig. 2 angedeutet ist. Entsprechend sind Spälte 28, 28' zwischen den Leitplatten 24 vorhanden.

Wie insbesondere aus Fig. 3 zu erkennen ist, erstrecken sich die Spälte 26 parallel zu der in dieser Draufsicht rechten Stirnwand 25 des Gehäuses 14. Dies ist die Wand, die gegenüberliegend ist zu der Wand, an der die Halterung 37 für den Deckel 36 angebracht ist.

Diese Stirnwand 25 erstreckt sich zwischen zwei Seitenwänden 35 und 39.

Wie insbesondere aus den Schnittdarstellungen von Fig. 1 bis 3 zu erkennen ist, ist die Prozesskammer 18 auf einer Seite durch eine Kammerwand 34 abgegrenzt. Die Kammerwand 34 erstreckt sich über die volle Breite zwischen den Seitenwänden 35 und 39.

Wie insbesondere aus der Schnittdarstellung von Fig. 1 und 2 ersichtlich ist, erstreckt sich die Kammerwand 34, vom Boden 20 aus gesehen, über eine gewisse Höhe, hier von etwa 300 mm, endet aber in einem Abstand vor dem oberen Ende des Gehäuses 14. Am oberen Ende ist die Kammerwand 34 abgerundet.

Die Kammerwand 34 grenzt im Inneren des Gehäuses 14 an eine Funktionskammer 38 an.

Die Funktionskammer 38 erstreckt sich somit neben der eigentlichen Prozesskammer 18 und wird seitlich durch Teile der Seitenwände 35 und 39 umgrenzt, im Inneren des Gehäuses 14 durch die Kammerwand 34, und am hinteren bzw. in der Darstellung von Fig. 2 und 3 linken Ende durch die Rückwand 31.

Wie insbesondere aus den Schnittdarstellungen von Fig. 1 und 2 zu erkennen, ist in der Funktionskammer 38 eine Filteranordnung aufgenommen. Das sind drei V-förmige ineinandergesteckte Grobstaubfilter 40, so genannte Filterstufen 1 bis 3, mit nach unten abnehmenden feineren Poren.

Unterhalb der drei V-förmigen Grobstaubfilter 40 ist noch eine so genannte Pocket-Feinstfilterstufe 41 angeordnet.

Unter der Funktionskammer 38 erstreckt sich eine im Schnitt V-förmige Kondensatsammelwanne 44, die mit einem Kondensatablauf 46 versehen ist.

Im Bereich der Prozesskammer 18, jedoch unterhalb des Bodens 20 und etwa direkt über der Wanne 44, ist ein Tieftemperatur-Kühler 48 angeordnet. Der Tieftemperatur-Kühler 48 ist so ausgelegt, dass er den Taupunkt der Prozessluft 29 unterschreiten kann, so dass von der Prozessluft 29 durch die Filteranordnung mitgerissenes Wasser oder Lösungsmittel auskondensieren und abtropfen kann. Diese Flüssigkeitsmengen werden von der Wanne 44 gesammelt und dem Kondensatablauf 46 zugeführt, über den diese Kondensate aus der Vorrichtung 10 abgeführt werden können.

Über dem Tieftemperatur-Kühler 48 ist ein Hochleistungsaxialgebläse 50 angeordnet, das zur Bewegung der Prozessluft 29 ausgelegt ist. Dieses kann elektromotorisch oder riemengetrieben sein.

Am abströmseitigen Ende, also über dem Axialgebläse 50, ist ein Wärmetauscher 52 angeordnet, über den die von dem Axialgebläse 50 an die Unterseite des Bodens 20 herangeführte Prozessluft 29 entsprechend konditioniert, sprich erwärmt, werden kann.

Zwischen dem Wärmetauscher 52 und der Unterseite des Bodens 20 sind noch so genannte Bypass-Klappen 54 angeordnet, die für eine spontane und schnelle Temperaturregelung der Prozessluft 29 dienen.

Aus den Schnittdarstellungen, insbesondere den Schnittdarstellungen von Fig. 1, 2 und 3, ist zu erkennen, dass im Boden 20 eine Linear-Sprühdüse 32 angeordnet ist, die vertikal nach oben in die Prozesskammer 18 sprüht. Die Linear-Sprühdüse 32 erstreckt sich etwa mittig in dem Querschnitt 16 der Prozesskammer 18 und verläuft parallel zur stirnseitigen Wand 25 des Gehäuses. Die Linear-Sprühdüse 32 kann über ihre gesamte Länge sprühen, oder auch nur abschnittsweise. Die Linear-Sprühdüse 32 befindet sich somit mittig zwischen der ersten Serie an übereinandergelegten Leitplatten 22 und der gegenüberliegenden zweiten Serie an übereinandergelegten Leitplatten 24.

Die Spälte 26, 26' der übereinandergelegten und sich teilweise überlappenden Leitplatten 22 sind so ausgerichtet, dass sie durch diese hindurchtretende Prozessluft 29 etwa horizontal verlaufend auf die Linear-Sprühdüse 32 richten.

Die Spälte 28, 28' der zweiten Serie an übereinandergelegten Leitplatten 24 sind dann so gerichtet, dass durch diese die Prozessluft 29 ebenfalls auf die LinearSprühdüse 32 zu gerichtet wird.

Dadurch entstehen zwei oppositäre, einander entgegengesetzt gerichtete Teilströmungen, die sich mittig im Bereich der Linear-Sprühdüse 32 treffen. Dort werden die oppositären, aufeinandertreffenden Prozessluftströme etwa rechtwinklig nach oben abgelenkt, wie in Fig. 2 angedeutet ist. Dieser Bereich ist die so genannte vertikale Aufbruchzone 30. Da die Linear-Sprühdüse 32 als vertikal nach oben sprühende Düse ausgebildet ist, wird den bewegten, an dieser Stelle hochsteigenden Gutteilchen 60 in diesem Bereich das flüssige Sprühmedium aufgesprüht.

Die Gutteilchen 60 bewegen sich beidseits der Aufbruchzone 30 nach oben und fallen dann, seitlich von der Aufbruchzone 30 weg, aufgrund der Schwerkraft wieder nach unten ab. Dabei prallen auch einige Teilchen an die Innenseite der Stirnwand 25 bzw. auf die Innenseite der Kammerwand 34 und werden von dieser nach unten wieder Richtung Boden 20 geleitet. Im Bereich des Bodens 20 werden die Gutteilchen 60 dann wieder von der durch die Spälte 26 und 28 hindurchtretenden Prozessluft 29 aufgenommen, beschleunigt und in Richtung der Aufbruchzone 30 bewegt. Die herabfallenden Gutteilchen 60 fallen dabei auf eine Art Luftpolster der etwa horizontal eingeführten Prozessluft 29.

Wie insbesondere aus Fig. 2 ersichtlich, trennt sich die Prozessluft 29 nach einer gewissen Zeit von den wieder herabfallenden Gutteilchen 60 und strömt zwischen der Unterseite des Deckels 36 und der Oberkante der Kammerwand 34 in die Funktionskammer 38.

Dort durchströmt die Prozessluft 29 von oben nach unten zunächst die Serie an drei Grobstaubfiltern 40, in denen stufenweise von der Prozessluft 29 mitgerissene Gutteilchen 60 oder Bruchstücke davon ausgefiltert werden.

Anschließend durchläuft die Prozessluft 29 noch die nachgeschaltete Pocket-Feinstfilterstufe 41, so dass sie quasi feststofffrei diese Feinstfilterstufe 41 verlässt. Die Prozessluft 29 wird dann durch das Axialgebläse 50 wieder angesaugt und an dem Tieftemperatur-Kühler 48 vorbei nach oben geführt.

Dabei kondensieren in der Prozessluft 29 vorhandene Flüssigkeitsmengen aus. Dies sind zum einen Wasser und vor allem Lösungsmittelbestandteile, die dazu dienen, das Behandlungsmedium, das durch die Linear-Sprühdüse 32 versprüht wird, zu lösen.

Durch das Axialgebläse 50 wird die sowohl von Fest- als auch von Flüssigteilen befreite Prozessluft 29 in Richtung Unterseite des Bodens 20 bewegt und beschleunigt. Über den Wärmetauscher 52 und die Bypass-Klappen 54 wird die Prozessluft 29 entsprechend konditioniert.

Nach Durchtreten durch den Boden 20 sorgt die Prozessluft 29 wieder dafür, dass mit dem Sprühmedium von der Linear-Sprühdüse 32 benetzte Gutteilchen 60 nach oben bewegt werden, die dann wieder seitlich auf den Boden 20 herabfallen. Die Konstruktion ist so, dass den Gutteilchen 60 ausreichend Zeit und vor allem auch Raum zur Verfügung steht, damit diese trocknen und nicht zu Agglomeraten zusammenbacken. Die entsprechend warme Prozessluft 29 nimmt dabei das Lösungsmittel auf und strömt dann, wie zuvor beschrieben, aus der Prozesskammer 18 wieder ab.

Somit arbeitet hier das Leistungsmodul 12, soweit es die Prozessluft 29 betrifft, in einem abgeschlossenen Kreislaufsystem.

Von der Außenseite wird lediglich der Linear-Sprühdüse 32 das zu versprühende flüssige Medium zugeführt, dessen Feststoffanteile auf die Gutteilchen 60 aufgebracht werden sollen und dessen flüssige Bestandteile von der Prozessluft 29 mitgerissen werden, bis diese den Kondensator wieder erreicht.

Das Leistungsmodul 12 ist nicht nur bezüglich der Prozessluft 29 ein in sich abgeschlossenes System, sondern bietet bei einer bestimmten Größe, insbesondere im Zusammenhang mit den zuvor genannten Maßen, eine Vorrichtung, in der eine relativ große Bandbreite an partikelförmigen Gutteilchen 60 behandelt werden kann. Die Untergrenze liegt bei Gutteilchen im Bereich von etwa 1,5 mm, die Obergrenze im ZentimeterBereich von Tabletten oder oblongförmigen Kapseln, wie sie insbesondere im medizinischen Bereich beschichtet werden sollen, oder in der Süßwaren- oder Lebensmittelindustrie mit einer Überzugsschicht versehen werden sollen. Die statische Produktfüllhöhe über dem Boden 20 liegt dabei etwa bei 135 mm. Damit ergibt sich eine Chargengröße pro Leistungsmodul 12 von etwa 33,5 Schüttlitern.

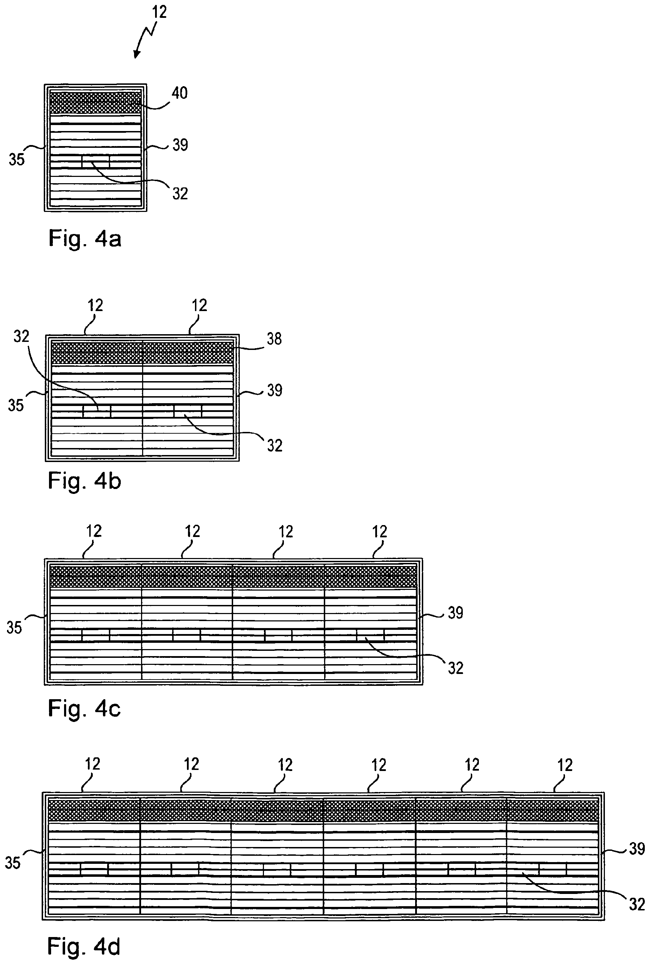

In Fig. 4b bis 4d ist dargestellt, wie mehrere zuvor beschriebene Leistungsmodule 12 zu einer Reihe zusammengesetzt sind.

Die Darstellung von Fig. 4a entspricht der Darstellung von Fig. 3, wobei hier das Leistungsmodul 12 um 90° gedreht ist. Aus Fig. 4b ist ersichtlich, dass zwei solche Leistungsmodule 12 zu einer Reihe zusammengesetzt sind.

Dazu wurde bei dem in der Darstellung von Fig. 4b linken Leistungsmodul 12 dessen Seitenwand 39 entfernt, und beim entsprechenden rechten Leistungsmodul 12 die Seitenwand 35.

Dadurch entsteht ein rechteckförmiges Gebilde, wie es in Fig. 4b dargestellt ist. Die jeweiligen Linear-Sprühdüsen 32 und damit auch die entsprechenden Aufbruchzonen 30 liegen dabei linear hintereinander oder sind entsprechend aneinandergereiht. Es ist auch zu erkennen, dass die Funktionskammern 38 an einer Seite nebeneinander angereiht sind, so dass die darin aufgenommenen Filter von einer Seite her zugänglich sind.

In Fig. 4c ist nun dargestellt, wie vier solcher Leistungsmodule 12 aneinandergereiht sind. Dabei sind dann bei den mittleren beiden Leistungsmodulen 12 die Seitenwände 35 und 39 nicht mehr vorhanden, so dass insgesamt gesehen eine rechteckförmige Prozesskammer entsteht, die die Breite eines Leistungsmoduls 12 hat, also etwa 500 mm, jedoch die Länge von vier Leistungsmodulen 12, also 2.000 mm.

In Fig. 4d ist dargestellt, wie sechs solcher Leistungsmodule 12 aneinandergereiht sind. Hier hat sich somit eine langerstreckte rechteckige Prozesskammer ergeben, deren Länge 3 m beträgt, und deren Breite 0,5 m beträgt.

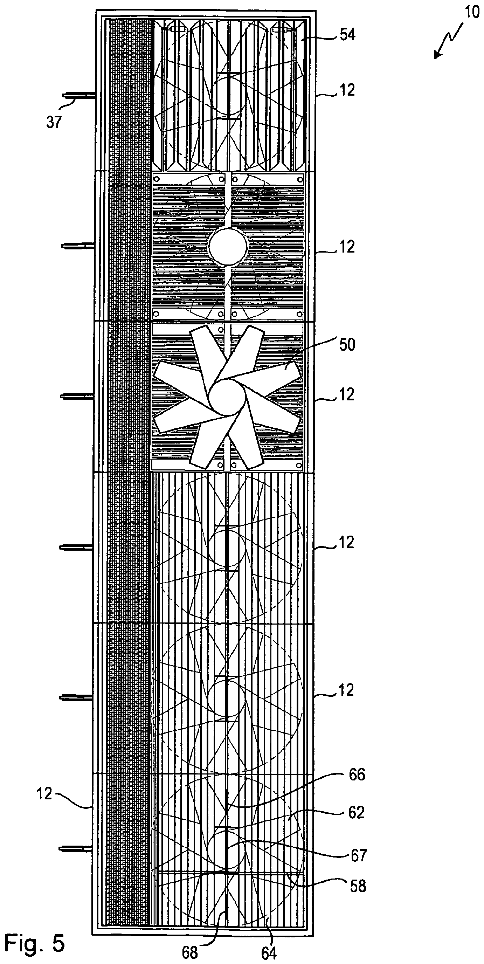

In Fig. 5 ist nochmals, etwas vergrößert, die Situation wie in Fig. 4d dargestellt, wobei in den in der Darstellung von Fig. 5 oberen drei Leistungsmodulen 12 die Schnitte Va bis Vb von Fig. 1 dargestellt sind.

Bei dem in Fig. 5 obersten Leistungsmodul 12 ist ein Schnitt knapp über den Bypass-Klappen 54 gezeigt, bei dem zweitobersten Leistungsmodul 12 ein Schnitt längs der Linie Vb unterhalb des Axialgebläses 50, und bei dem dritten Leistungsmodul 12 von oben der Schnitt Vc knapp über dem Axialgebläse 50.

In Fig. 5 ist ersichtlich, dass bei dem in dieser Darstellung untersten Leistungsmodul 12 von oben eine Trennwand 58 eingeschoben ist, die die Prozesskammer 18 in zwei unterschiedliche Untereinheiten 62 und 64 aufteilt.

Dabei ist die Trennwand 58 so gesetzt, dass sie die Prozesskammer 18 im Verhältnis 2:1 aufteilt. Das heißt, die kleinere Untereinheit 64 entspricht einem Drittel des ursprünglichen Prozesskammervolumens, die Untereinheit 62 etwa zwei Dritteln.

In diesen Untereinheiten 62 und 64 können Versuche im Kleinst- oder Labormaßstab durchgeführt werden, wenn ein Gut behandelt werden soll, für das erst die entsprechenden Behandlungskonditionen empirisch gesucht werden müssen. Die zuvor gezeigte Unterteilung war im Verhältnis 2:1; es können selbstverständlich auch andere Unterteilungsmaßstäbe für entsprechende Voruntersuchungen herangezogen werden.

Aus der Darstellung von Fig. 5 ist ersichtlich, dass die Linear-Sprühdüse 32 in drei aktive Abschnitte 66, 67 und 68 unterteilt ist.

Wird die Trennwand 58 so gesetzt, wie in Fig. 5 dargestellt, kann dann der Abschnitt 68 die Untereinheit 64 mit Sprühmedium beaufschlagen. Dementsprechend beaufschlagen die beiden Abschnitte 66 und 67 die größere Untereinheit 62 mit Sprühmedium.

In Fig. 3 ist angedeutet, dass zwischen den übereinanderliegenden Leitplatten 22 bzw. 24 Luftleitelemente 70 angeordnet sind.

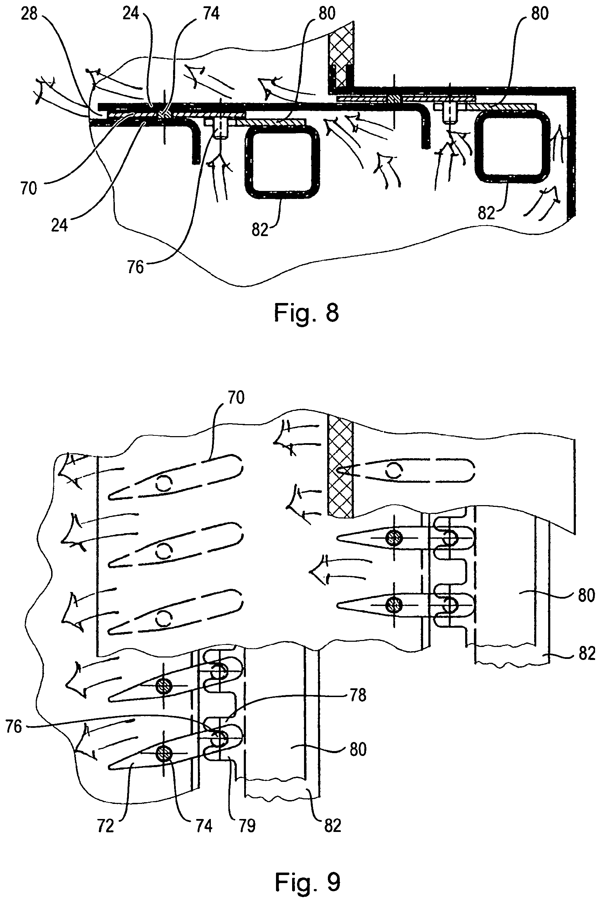

Aus den vergrößerten Darstellungen von Fig. 8 bis 11 ist zu entnehmen, dass jedes Luftleitelement 70 aus einem Leitfinger 72 besteht, der über einen hochstehenden Lagerbolzen 74, der sich zwischen zwei überlappenden Leitplatten 24 erstreckt, drehbar gelagert ist. Dieser Lagerbolzen 74 kann zugleich auch als Distanzhalter zwischen zwei übereinandergelegten Leitplatten 24 dienen.

An der Unterseite jedes Leitfingers 72 steht ein Stehbolzen 76 weg, der zwischen zwei Zähnen 78 und 79 einer Kämmplatte 80 aufgenommen ist. Die Kämmplatte 80 selbst ist mit einer Stellstange 82 verbunden.

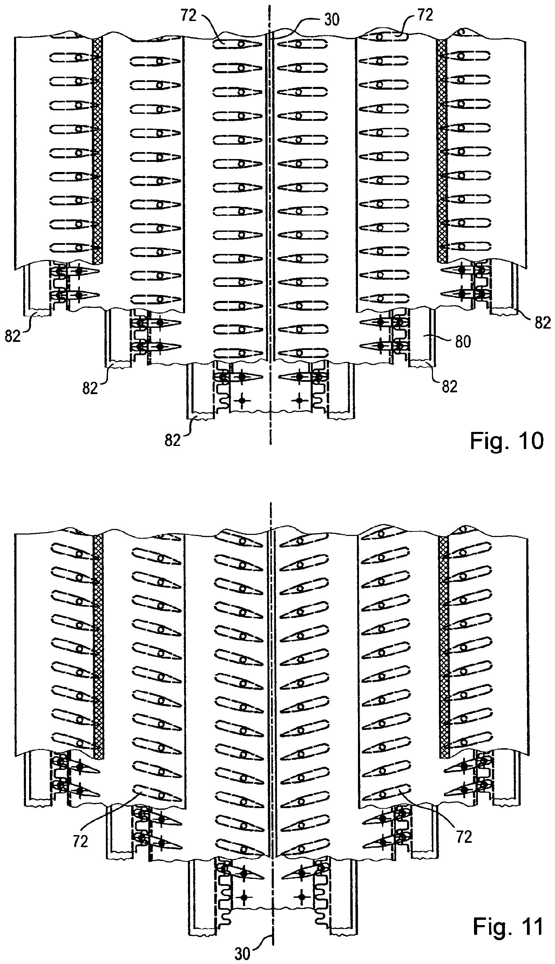

In Fig. 10 ist eine Situation dargestellt, bei der die Stellstange 82 die Kämmplatte 80 in eine solche Stellung verschoben hat, dass alle Leitfinger 72 exakt rechtwinklig zur Aufbruchzone 30 bzw. zur entsprechenden Linear-Sprühdüse 32 stehen. In diesem Falle würden den beiden oppositären Teilströmen durch die Leitfinger 72 keine Bewegungskomponenten in Richtung der Aufbruchzone 30 bzw. in Richtung der Längserstreckung der Linear-Sprühdüse 32 auferlegt. In der in Fig. 11 dargestellten Verstellposition würden die Leitfinger 72 den oppositär auf die Aufbruchzone 30 zuströmenden Teilströmen jeweils eine Bewegungskomponente in die gleiche Richtung auferlegen, in der Darstellung von Fig. 11 nach unten. Dies kann beispielsweise dazu ausgenutzt werden, um die Vorrichtung aus mehreren zusammengefügten Leistungsmodulen 12 an einem Ende zu entleeren.

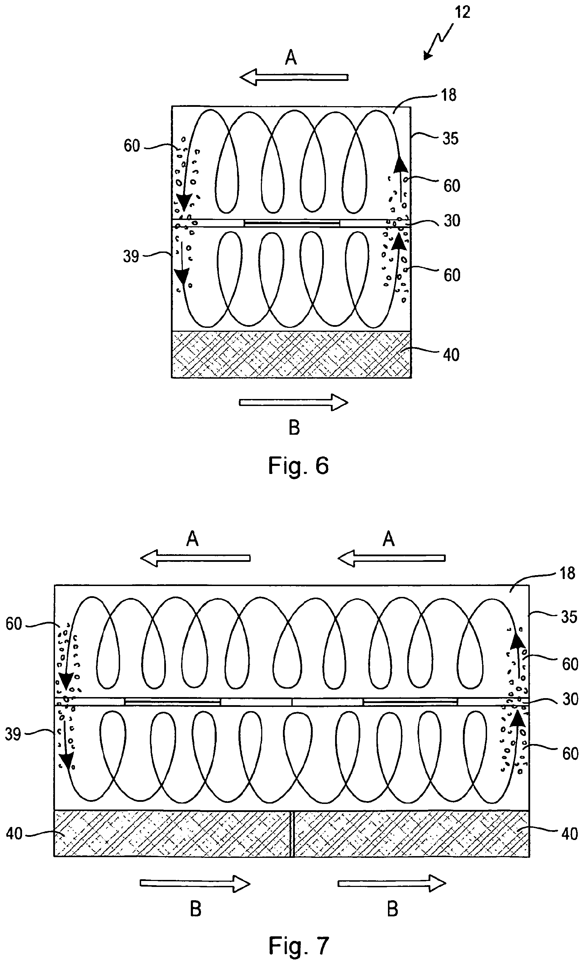

In Fig. 3 ist dargestellt, dass die Luftleitelemente 70 bzw. die entsprechenden Leitfinger 72 so angestellt sind, dass sie den oppositären Strömen eine Bewegungskomponente auferlegen, die, in Längsrichtung der Aufbruchzone 30 gesehen, entgegengesetzt sind. Was daraus resultiert, ist in den Fig. 6 und 7 dargestellt. In Fig. 6 ist stark schematisch eine Draufsicht auf einen Boden 20 eines Leistungsmoduls 12 dargestellt, wie es in Fig. 3 gezeigt ist, nur um 90° gedreht.

Wie zuvor erwähnt, wird auf einer Seite der Aufbruchzone 30 der einströmenden Prozessluft 29 eine Bewegungskomponente in Richtung A auferlegt.

Auf der gegenüberliegenden Seite sind die Leitfinger 72 so ausgerichtet, dass der Prozessluft 29 eine Bewegungskomponente längs der Aufbruchzone 30 in der entgegengesetzten Richtung B auferlegt wird.

Daraus resultiert, dass durch die Bewegungskomponente in Richtung B am rechten Ende die Gutteilchen 60 etwas verdichtet werden, da sie aufgrund der Seitenwand 35 nicht mehr weiterbewegt werden, so dass diese über die Aufbruchzone 30 hinweg in Richtung der anderen Hälfte bewegt werden.

Dort wurde im Bereich der Seitenwand 35 durch die entgegengesetzt gerichtete Bewegungskomponente A eine gewisse Verarmung an Gutteilchen 60 erzeugt, so dass diese hier angesaugt und in Richtung der gegenüberliegenden Seitenwand 39 bewegt werden, wo sie wieder etwas verdichtet werden. Dort treten diese dann wieder über die Aufbruchzone 30 hinüber in den verarmten Bereich mit der Bewegungskomponente B. Diese Bewegungskomponente überlagert sich selbstverständlich mit der vertikal nach oben und seitlich herabfallenden Bewegungskomponente, wie sie in Fig. 2 dargestellt ist.

Insgesamt gesehen resultiert in einem Leistungsmodul 12 somit eine im Kreislauf umlaufende Bewegungskomponente längs der Pfeile A und B und längs der Innenseite der Seitenwände 35 und 39.

Diese Bewegungskomponenten sorgen für eine gewisse Vermischung der Gutteilchen 60 in der Prozesskammer 18 eines Leistungsmoduls 12 und tragen zu einem gleichmäßigen Behandlungsergebnis bei.

In Fig. 7 ist nun dargestellt, dass dies auch dann resultiert, wenn mehrere Leistungsmodule 12, hier zwei Leistungsmodule 12, aneinandergereiht sind.

Aus Fig. 7 ist zu erkennen, dass durch die zuvor beschriebenen Leitfinger 72 auf einer Seite der Aufbruchzone 30 die Bewegungskomponenten B und auf der gegenüberliegenden Seite die Bewegungskomponenten A vorherrschen. Ab hier werden dann die Gutteilchen 60 jeweils zum einen Ende der Prozesskammer 18 geführt, dort verdichtet, überlaufen dann die Aufbruchzone 30 und werden anschließend in entgegengesetzter Richtung wieder in der anderen Teilhälfte längs der Bewegungskomponente A bewegt. Dies resultiert, wenn man die Leitfinger 72, wie in Fig. 3 dargestellt, entsprechend ausrichtet.

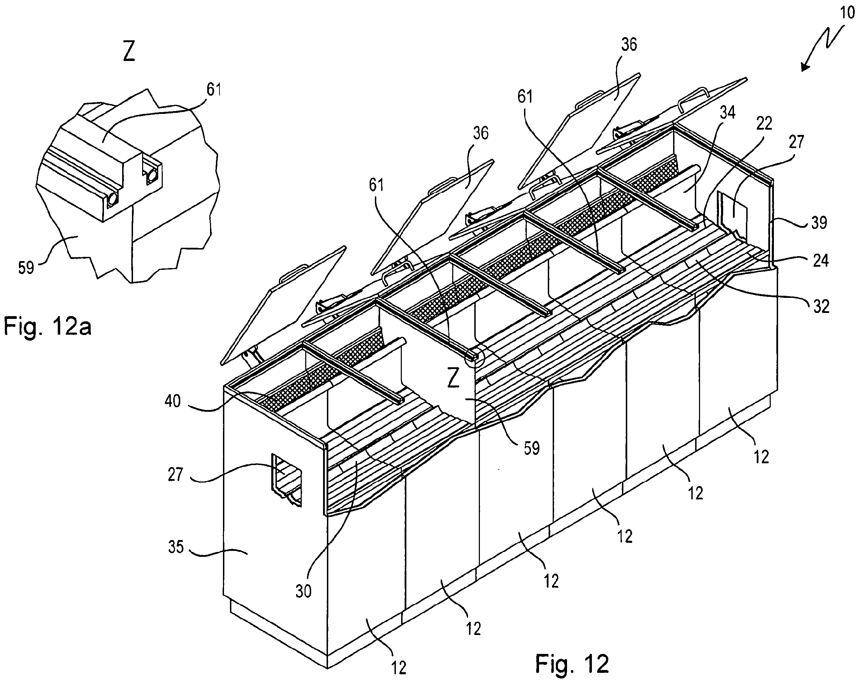

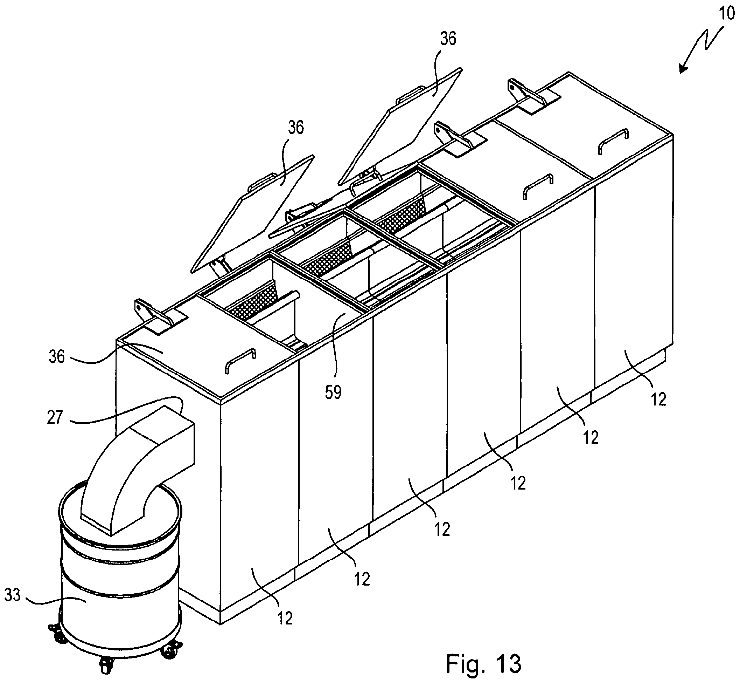

In den Fig. 12 und 13 ist perspektivisch eine Vorrichtung 10 dargestellt, die insgesamt aus sechs Leistungsmodulen 12 zusammengesetzt ist. Aus Fig. 12 ist zu erkennen, dass zwischen dem zweiten und dritten aneinandergereihten Leistungsmodul 12 eine Trennwand 59 eingesetzt ist, die die gesamte Prozesskammer 18 in zwei Untereinheiten unterteilt, eine Untereinheit entsprechend aus zwei zusammengesetzten Leistungsmodulen 12, und eine Untereinheit aus vier zusammengesetzten Leistungsmodulen 12.

Wie aus der vergrößerten Darstellung von Fig. 12a ersichtlich ist, ist die Trennwand 59 ein einfaches Trennblech, das am oberen Ende mit einer Leiste 61 versehen ist. Die Leiste 61 ist ohnehin vorhanden, denn sie dient als Auflagefläche für die benachbarten Deckel 36 von zweitem und drittem Leistungsmodul 12. Das heißt, im Bedarfsfall wird die Trennwand 59 einfach von unten in die Leiste 61 eingeschoben und von dieser gehalten. Dies zeigt, wie durch relativ einfache Mittel eine hohe Flexibilität an Prozesskammergrößen unterschiedlichen Volumens erhalten werden kann.

Aus der perspektivischen Darstellung von Fig. 12 ist zu erkennen, dass am vorderen und/oder hinteren Ende der Vorrichtung 10 in der entsprechenden Wand 35 bzw. 39 des jeweiligen Leistungsmoduls 12 eine Öffnung 27 vorgesehen ist, über die der Innenraum entleert werden kann. Dazu ist, wie in Fig. 13 dargestellt ist, ein so genanntes Entleerfass 33 angeschlossen, in das das behandelte Gut nach einem Behandlungsvorgang entleert werden kann. Um das gesamte Gut gezielt in diese Richtung zu entleeren, werden die Luftleitelemente 70 bzw. die Leitfinger 72 so ausgerichtet, wie das in Fig. 11 dargestellt ist, das heißt, dass dem Gut eine Bewegungskomponente auferlegt wird, die dieses in Richtung des Entleerfasses 33 bewegt.

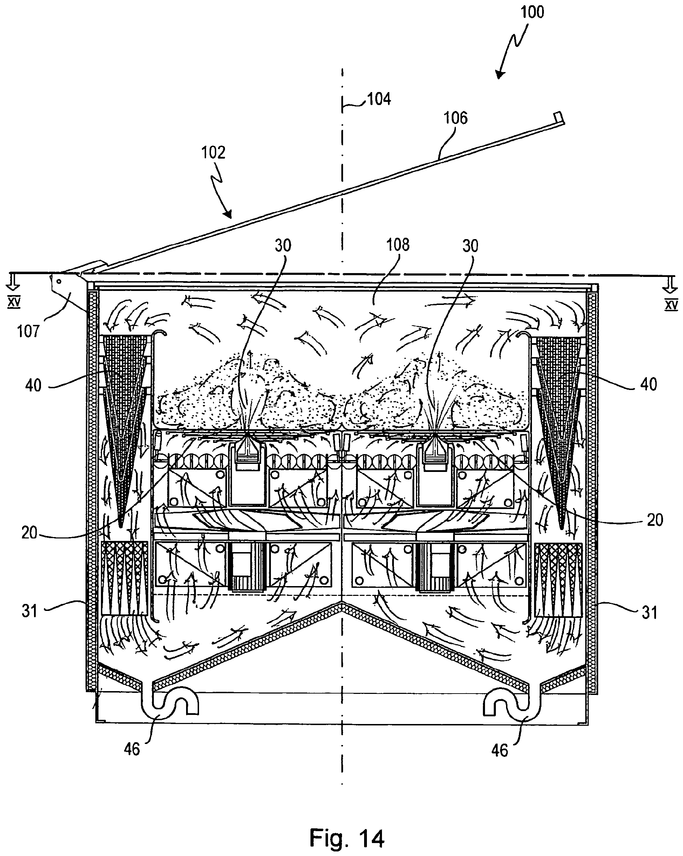

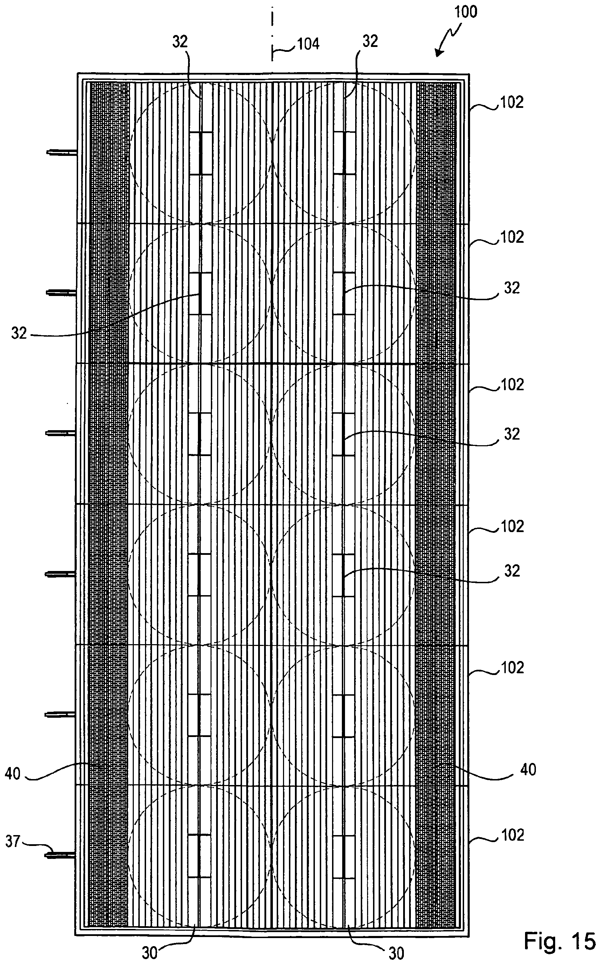

In den Fig. 14 und 15 ist ersichtlich, dass bei der Vorrichtung 100 der Grundbaustein ein Doppel-Leistungsmodul 102 ist.

Vergleicht man das Leistungsmodul 12 von Fig. 1 mit dem Doppel-Leistungsmodul 102, so erkennt man sofort, dass das Doppel-Leistungsmodul 102 aus zwei spiegelbildlich zu einer Spiegelebene 104 zusammengesetzten Leistungsmodulen 12 zusammengebaut ist, bei denen die Stirnwand 25 weggelassen ist.

Somit weist das Doppel-Leistungsmodul 102 an den der Spiegelebene 104 gegenüberliegenden äußeren Seiten die entsprechenden Filter 40 auf und entsprechend zwei aneinandergrenzende Böden 20, die sich auf dem gleichen Niveau befinden. Somit existieren auch zwei Aufbruchzonen 30, die allerdings in einer gemeinsamen Prozesskammer 108 angeordnet sind.

Der Deckel 106 ist dann so ausgebildet, dass er den Innenraum des Doppel-Leistungsmoduls 102 abdeckt. In Fig. 14 ist somit zu erkennen, dass das erste oder ausgängliche Doppel-Leistungsmodul 102 aus zwei spiegelbildlich zueinander angeordneten Leistungsmodulen 12 zusammengesetzt ist, die, was die wesentlichen Bauteile betrifft, gleich aufgebaut sind wie das Leistungsmodul 12. Daher sind auch für vergleichbare Bauteile gleiche Bezugszeichen verwendet worden.

Aus Fig. 15 ist zu entnehmen, dass sechs solcher Doppel-Leistungsmodule 102 in einer Reihe aneinandergeordnet sind, so dass sich die beiden parallel verlaufenden Aufbruchzonen 30 in Längs- bzw. Aneinanderreihrichtung erstrecken. Dementsprechend sind auch die in diesem Bereich angeordneten Linear-Sprühdüsen 32 in einer Doppelreihe hintereinander angeordnet. Bei dieser Ausgestaltung ist dann schon in dem Doppel-Leistungsmodul 102 etwa die doppelte Menge wie in dem Leistungsmodul 12 zu behandeln. Dementsprechend ist in der in Fig. 13 dargestellten Gesamtanlage aus sechs Doppel-Leistungsmodulen 112 die zwölffache Menge zu behandeln.

## Patentansprüche

1. Vorrichtung zum Behandeln von partikelförmigem Gut (60), mit einer Prozesskammer (18, 108), die einen Boden (20) aufweist, der aus sich überlappenden Leitplatten (22, 24) aufgebaut ist, zwischen denen Spälte (26, 26', 28, 28') vorhanden sind, durch die Prozessluft (29) etwa horizontal in die Prozesskammer (18, 108) einführbar ist, wobei die Leitplatten (22, 24) derart angeordnet sind, dass zwei entgegengesetzt aufeinander zu gerichtete Strömungen an Prozessluft (29) entstehen, die längs einer Aufbruchzone (30) aufeinandertreffen, wobei in der Aufbruchzone (30) dem Gut (60) ein Behandlungsmedium über zumindest eine Linear-Sprühdüse (32) aufsprühbar ist, **dadurch gekennzeichnet, dass** die Vorrichtung (10, 100) aus einzelnen Leistungsmodulen (12, 102) etwa gleicher Bauart und Größe zusammensetzbar ist, wobei die Leistungsmodule (12, 102) einen rechteckigen Querschnitt aufweisen und über zumindest eine offene Rechteckseite zu einer Reihe aneinanderfügbar sind, wobei sich die Längserstreckungen der jeweiligen Aufbruchzonen (30) in Richtung der Reihe aneinanderfügen.

2. Vorrichtung nach Anspruch 1, **dadurch gekennzeichnet, dass** zwischen zwei benachbarte Leistungsmodule (12, 102) eine Trennwand (59) einführbar ist, die die aneinandergefügten Leistungsmodule (12, 102) zu Untereinheiten an Leistungsmodulen (12, 102) auftrennt.

3. Vorrichtung nach Anspruch 1 oder 2, **dadurch gekennzeichnet, dass** jedes Leistungsmodul (12, 102) mit einem eigenen Gebläse (50) versehen ist, durch das die Prozessluft (29) durch den Boden (20) in die Prozesskammer (18, 108) einführbar ist.

4. Vorrichtung nach Anspruch 3, **dadurch gekennzeichnet, dass** das Gebläse als Axialgebläse (50) aufgebaut ist, dessen Ventilator unterhalb des Bodens (20) im Leistungsmodul (12, 102) angeordnet ist.

5. Vorrichtung nach einem der Ansprüche 1 bis 4, **dadurch gekennzeichnet, dass** jedes Leistungsmodul (12) an einer um 90° zur offenen Seite versetzten Seite mit einer Filteranordnung (40, 41) versehen ist.

6. Vorrichtung nach einem der Ansprüche 1 bis 5, **dadurch gekennzeichnet, dass** jedes Leistungsmodul (12, 102) mit einem bewegbaren Deckel (36, 106) versehen ist, der einen oberen Abschluss der Prozesskammer (18, 108) darstellt.

7. Vorrichtung nach Anspruch 6, **dadurch gekennzeichnet, dass** die von der Prozesskammer (18, 108) abströmende Prozessluft (29) durch den Deckel (36, 106) seitlich und nach unten gerichtet in die Filteranordnung (40, 41) umlenkbar ist.

8. Vorrichtung nach einem der Ansprüche 1 bis 7, **dadurch gekennzeichnet, dass** unter dem Boden (20) ein Wärmetauscher (52) angeordnet ist.

9. Vorrichtung nach einem der Ansprüche 1 bis 8, **dadurch gekennzeichnet, dass** in der Aufbruchzone (30) eine zumindest abschnittsweise vertikal nach oben sprühende Linear-Sprühdüse (32) angeordnet ist.

10. Vorrichtung nach einem der Ansprüche 1 bis 9, **dadurch gekennzeichnet, dass** in ein Leistungsmodul (12) zumindest eine Wand (58) einbringbar ist, die die Prozesskammer (18) dieses Leistungsmoduls (12) in zumindest zwei Untereinheiten (62, 64) aufteilt.

11. Vorrichtung nach Anspruch 10, **dadurch gekennzeichnet, dass** die LinearSprühdüse (32) einzelne Abschnitte (66, 67, 68) aufweist, die jeweils die durch die eingebrachte Wand (58) entstehenden Untereinheiten (62, 64) mit Sprühmedium versorgen.

12. Vorrichtung nach einem der Ansprüche 1 bis 11, **dadurch gekennzeichnet, dass** zwei Leistungsmodule (12), quer zur Richtung der Aneinanderfügung, zu einem Doppel-Leistungsmodul (102) zusammengesetzt sind.

13. Vorrichtung nach Anspruch 12, **dadurch gekennzeichnet, dass** zwei Leistungsmodule (12) mit einer Filteranordnung (40, 41) an einer Seite so zu einem Doppel-Leistungsmodul (102) zusammensetzbar sind, dass die Filteranordnungen (40, 41) an gegenüberliegenden Seiten, quer zur Reihenanordnung, zum Liegen kommen.

14. Vorrichtung nach einem der Ansprüche 1 bis 13, **dadurch gekennzeichnet, dass** ein Leistungsmodul (12) eine Prozesskammer (18) mit einem etwa quadratischen Querschnitt (16) aufweist, in dem mittig die Aufbruchzone (30) verläuft.

15. Vorrichtung nach Anspruch 14, **dadurch gekennzeichnet, dass** die Prozesskammer (18) eines Leistungsmoduls (12) eine Querschnittsbreite im Größenbereich von 300 bis 700 mm und eine statische Produktfüllhöhe im Bereich von 100 bis 150 mm aufweist.

16. Vorrichtung nach Anspruch 15, **dadurch gekennzeichnet, dass** die Prozesskammer (18) eine Querschnittsbreite im Bereich von 400 bis 600 mm und eine statische Produktfüllhöhe von 110 bis 140 mm aufweist.

17. Vorrichtung nach Anspruch 15 oder 16, **dadurch gekennzeichnet, dass** die Prozesskammer (18) eine Querschnittsbreite von etwa 500 mm und eine statische Produktfüllhöhe von ca. 135 mm aufweist.

18. Vorrichtung nach einem der Ansprüche 9 bis 17, **dadurch gekennzeichnet, dass** die Linear-Sprühdüse (32) sprühaktive Längenabschnitte von 50 bis 100 mm aufweist.

19. Vorrichtung nach einem der Ansprüche 1 bis 18, **dadurch gekennzeichnet, dass** im Boden (20) Luftleitelemente (70) angeordnet sind, die beidseits der Aufbruchzone (30) der durch den Boden (20) strömenden Prozessluft (29) eine Bewegungskomponente (A, B) in Richtung der Reihe der aneinanderfügbaren Leistungsmodule (12) auferlegt.

20. Vorrichtung nach Anspruch 19, **dadurch gekennzeichnet, dass** die Luftleitelemente (70) verstellbar sind, so dass durch diese der Prozessluft (29) eine veränderbare Bewegungskomponente (A, B) in Richtung der Reihe auferlegbar ist.

21. Vorrichtung nach Anspruch 19 oder 20, **dadurch gekennzeichnet, dass** die Luftleitelemente (70) derart einstellbar sind, dass auf einer Seite einer Aufbruchzone (30) der Prozessluft (29) eine Bewegungskomponente (A) in einer Richtung der Reihe auferlegbar ist, auf der anderen Seite der Aufbruchzone (30) jedoch eine Bewegungskomponente (B) in entgegengesetzter Richtung auferlegbar ist.

22. Vorrichtung nach einem der Ansprüche 19 bis 21, **dadurch gekennzeichnet, dass** die Luftleitelemente (70) als zwischen den Leitplatten (22, 24) angeordnete, um eine Hochachse (74) verschwenkbare Leitfinger (72) ausgebildet sind, die mit einem gemeinsamen Stellelement (80, 82) verbunden sind, dessen Verschiebung eine gemeinsame Verschwenkung der Leitfinger (72) bewirkt.

23. Vorrichtung nach einem der Ansprüche 20 bis 22, **dadurch gekennzeichnet, dass** die Luftleitelemente (70) auf einer Seite der Aufbruchzone (30) unabhängig von den Luftleitelementen (70) auf der gegenüberliegenden Seite verstellbar sind.

24. Vorrichtung nach Anspruch 23, **dadurch gekennzeichnet, dass** die Steuerung der Verstellbarkeit der Luftleitelemente (70) derart ausgebildet ist, dass beim Aneinanderreihen benachbarter Leistungsmodule (12) die Steuerung miteinander koppelbar ist.

## Claims

1. Apparatus for treating particulate material (60), comprising a process chamber (18, 108) which has a floor (20) constructed from overlapping guide plates (22, 24) between which there are gaps (26, 26', 28, 28') present through which process air (29) can be introduced approximately horizontally into the process chamber (18, 108), wherein the guide plates (22, 24) are arranged such that two flows of process air (29), which are oppositely directed one towards the other and meet along a riser zone (30), are formed, wherein in the riser zone (30) a treatment medium can be sprayed onto the material (60) via at least one linear spray nozzle (32), **characterized in that** the apparatus (10, 100) can be composed of individual performance modules (12, 102) of approximately same construction type and size, wherein the performance modules (12, 102) have a rectangular cross section and can be joined together via at least one open rectangle side to form a row, the longitudinal extents of the respective riser zones (30) joining together in the direction of the row.

2. Apparatus according to Claim 1, **characterized in that** a partition (59) can be inserted between two adjacent performance modules (12, 102), which partition splits the joined-together performance modules (12, 102) into sub-units of performance modules (12, 102).

3. Apparatus according to Claim 1 or 2, **characterized in that** each performance module (12, 102) is provided with an own blower (50), by which the process air (29) can be introduced into the process chamber (18, 108) through the floor (20).

4. Apparatus according to Claim 3, **characterized in that** the blower is constructed as an axial-flow blower (50), the fan of which is arranged beneath the floor (20) in the performance module (12, 102).

5. Apparatus according to one of Claims 1 to 4, **characterized in that** each performance module (12), on a side offset by 90° from the open side, is provided with a filter arrangement (40, 41).

6. Apparatus according to one of Claims 1 to 5, **characterized in that** each performance module (12, 102) is provided with a movable lid (36, 106), which constitutes an upper extremity of the process chamber (18, 108).

7. Apparatus according to Claim 6, **characterized in that** the process air (29) flowing off from the process chamber (18, 108) is diverted by the lid (36, 106), in a laterally and downwardly directed passage, into the filter arrangement (40, 41).

8. Apparatus according to one of Claims 1 to 7, **characterized in that** under the floor (20) there is arranged a heat exchanger (52).

9. Apparatus according to one of Claims 1 to 8, **characterized in that** in the riser zone (30) is arranged a linear spray nozzle (32), which sprays, at least in sections, vertically upwards.

10. Apparatus according to one of Claims 1 to 9, **characterized in that** at least one wall (58) can be inserted into a performance module (12), wherein the at least one wall (58) divides the process chamber (18) of this performance module (12) into at least two sub-units (62, 64).

11. Apparatus according to Claims 10, **characterized in that** the linear spray nozzle (32) has individual portions (66. 67. 68), which respectively supply the sub-units (62, 64) formed by the inserted wall (58) with spraying medium.

12. Apparatus according to one of Claims 1 to 11, **characterized in that** two performance modules (12), transversely to the direction of joining, are combined into a double performance module (102).

13. Apparatus according to Claim 12, **characterized in that** two performance modules (12) having a filter arrangement (40, 41) on one side can be combined into a double performance module (102) in such a way that the filter arrangements (40, 41) end up situated on opposite sides, transversely to the row arrangement.

14. Apparatus according to one of Claim 1 to 13, **characterized in that** a performance module (12) has a process chamber (18) of approximately square cross section (16), in which the riser zone (30) runs centrally.

15. Apparatus according to Claim 14, **characterized in that** the process chamber (18) of a performance module (12) has a cross-sectional width within the size range from 300 to 700 mm and a static product fill height within the range from 100 to 150 mm.

16. Apparatus according to Claim 15, **characterized in that** the process chamber (18) has a cross-sectional width within the range from 400 to 600 mm and a static product fill height from 110 to 140 mm.

17. Apparatus according to Claim 15 or 16, **characterized in that** the process chamber (18) has a cross-sectional width of approximately 500 mm and a static product fill height of about 135 mm.

18. Apparatus according to one of Claims 9 to 17, **characterized in that** the linear spray nozzle (32) has spray-active longitudinal portions of 50 to 100 mm.

19. Apparatus according to one of Claims 1 to 18, **characterized in that** in the floor (20) are arranged air guide elements (70), which on both sides of the riser zone (30) impose upon the process air (29) flowing through the floor (20) a motion component (A, B) in the direction of the row of joinable performance modules (12).

20. Apparatus according to Claim 19, **characterized in that** the air guide elements (70) are adjustable, so that a variable motion component (A, B) in the direction of the row can be imposed by these upon the process air (29).

21. Apparatus according to Claim 19 or 20, **characterized in that** the air guide elements (70) are adjustable in such a way that on one side of a riser zone (30) a motion component (A) in one direction of the row can be imposed upon the process air (29), whilst on the other side of the riser zone (30) a motion component (B) can be imposed in the opposite direction.

22. Apparatus according to one of Claims 19 to 21, **characterized in that** the air guide elements (70) are configured as guide fingers (72) arranged between the guide plates (22, 24) and pivotable about a vertical axis (74), which guide fingers are connected to a common actuating element (80, 82), the displacement of which produces a joint pivoting of the guide fingers (72).

23. Apparatus according to one of Claims 20 to 22, **characterized in that** the air guide elements (70) on one side of the riser zone (30) are adjustable independently from the air guide elements (70) of the opposite side.

24. Apparatus according to Claim 23, **characterized in that** the control mechanism for the adjustability of the air guide elements (70) is configured such that, when adjacent performance modules (12) are lined up together, the control mechanisms can be coupled to one another.

## Revendications

1. Ensemble de traitement de produits (60) en forme de particules, présentant une chambre de traitement (18, 108) dotée d'un fond (20) constitué de plaques de guidage (22, 24) qui se recouvrent mutuellement et entre lesquelles sont situés des interstices (26, 26', 28, 28') par lesquels de l'air de traitement (29) peut être introduit sensiblement à l'horizontale dans la chambre de traitement (18, 108), les plaques de guidage (22, 24) étant disposées de telle sorte que deux écoulements d'air de traitement (29) orientés dans des directions mutuellement opposées soient formés et entrent en contact mutuel le long d'une zone de remontée (30), un fluide de traitement pouvant être pulvérisé sur le produit (60) dans la zone de remontée (30) par l'intermédiaire d'au moins une tuyère linéaire de pulvérisation (32),
**caractérisé en ce que** l'ensemble (10, 100) peut être formé de l'assemblage de modules de puissance (12, 102) séparés, de structure et de taille sensiblement identiques,
**en ce que** les modules de puissance (12, 102) présentent une section transversale rectangulaire et peuvent être assemblés en série par l'intermédiaire d'au moins un côté ouvert du rectangle et **en ce que** les différentes zones de remontée (30) se rejoignent dans leur extension longitudinale dans la direction de la série.

2. Ensemble selon la revendication 1, **caractérisé en ce qu'**une paroi de séparation (59) qui sépare des modules de puissance (12, 102) adjacents en sous-unités de modules de puissance (12, 102) peut être insérée entre deux modules de puissance (12, 102) voisins.

3. Ensemble selon les revendications 1 ou 2, **caractérisé en ce que** chaque module de puissance (12, 102) est doté de sa propre soufflante (50) par laquelle l'air de traitement (29) peut être introduit dans la chambre de traitement (18, 108) à travers le fond (20).

4. Ensemble selon la revendication 3, **caractérisé en ce que** la soufflante est configurée comme soufflante axiale (50) dont le ventilateur est disposé en dessous du fond (20) dans le module de puissance (12, 102).

5. Ensemble selon l'une des revendications 1 à 4, **caractérisé en ce que** sur un côté décalé de 90° du côté ouvert, chaque module de puissance (12) est doté d'un ensemble de filtre (40, 41).

6. Ensemble selon l'une des revendications 1 à 5, **caractérisé en ce que** chaque module de puissance (12, 102) est doté d'un couvercle mobile (36, 106) qui forme la fermeture supérieure de la chambre de traitement (18, 108).

7. Ensemble selon la revendication 6, **caractérisé en ce que** l'air de traitement (29) qui sort de la chambre de traitement (18, 108) peut être dévié latéralement et vers le bas dans l'ensemble de filtre (40, 41) par le couvercle (36, 106).

8. Ensemble selon l'une des revendications 1 à 7, **caractérisé en ce qu'**un échangeur de chaleur (52) est disposé en dessous du fond (20).

9. Ensemble selon l'une des revendications 1 à 8, **caractérisé en ce qu'**une tuyère linéaire de pulvérisation (32) qui pulvérise au moins en partie verticalement vers le haut est disposée dans la zone de remontée (30).

10. Ensemble selon l'une des revendications 1 à 9, **caractérisé en ce qu'**au moins une paroi qui divise la chambre de traitement (18) de son module de puissance (12) en au moins deux sous-unités (62, 64) peut être insérée dans un module de puissance (12).

11. Ensemble selon la revendication 10, **caractérisé en ce que** la tuyère linéaire de pulvérisation (32) présente des sections distinctes (66, 67, 68), chacune desquelles alimentant en fluide de pulvérisation les sous-unités (62, 64) formées par l'insertion de la paroi (58).

12. Ensemble selon l'une des revendications 1 à 11, **caractérisé en ce que** deux modules de puissance (12) peuvent être assemblés transversalement à la direction de leur mise en série pour former un module de puissance (102) double.

13. Ensemble selon la revendication 12, **caractérisé en ce que** deux modules de puissance (12) dotés d'un ensemble de filtre (40, 41) peuvent être assemblés sur un côté pour former un module de puissance (102) double de telle sorte que les ensembles de filtre (40, 41) viennent se placer sur des côtés opposés, transversalement par rapport à l'agencement en série.

14. Ensemble selon l'une des revendications 1 à 13, **caractérisé en ce qu'**un module de puissance (12) présente une chambre de traitement (18) de section transversale (16) sensiblement carrée au milieu de laquelle s'étend la zone de remontée (30).

15. Ensemble selon la revendication 14, **caractérisé en ce que** la chambre de traitement (18) d'un module de puissance (12) présente une section transversale dont la largeur est de l'ordre de 300 à 700 mm et une hauteur de remplissage statique de produits de l'ordre de 100 à 150 mm.

16. Ensemble selon la revendication 15, **caractérisé en ce que** la chambre de traitement (18) présente une section transversale d'une largeur de l'ordre de 400 à 600 mm et une hauteur statique de remplissage par le produit de 110 à 140 mm.

17. Ensemble selon les revendications 15 ou 16, **caractérisé en ce que** la chambre de traitement (18) présente une section transversale d'une largeur d'environ 500 mm et d'une hauteur statique de remplissage par le produit d'environ 135 mm.

18. Ensemble selon l'une des revendications 9 à 17, **caractérisé en ce que** la tuyère linéaire de pulvérisation (32) présente des sections longitudinales actives en pulvérisation longues de 50 à 100 mm.

19. Ensemble selon l'une des revendications 1 à 18, **caractérisé en ce que** des éléments (70) de guidage d'air qui confèrent à l'air de traitement (29) s'écoulant à travers le fond (20) une composante de déplacement (A, B) dans la direction de la série de modules de puissance (12) aptes à être assemblés sont disposés dans le fond (20) des deux côtés de la zone de remontée (30).

20. Ensemble selon la revendication 19, **caractérisé en ce que** les éléments (70) de guidage d'air sont ajustables, de telle sorte qu'ils permettent de conférer à l'air de traitement (29) une composante de déplacement (A, B) variable dans la direction de la série.

21. Ensemble selon les revendications 19 ou 20, **caractérisé en ce que** les éléments (70) de guidage d'air peuvent être ajustés de telle sorte qu'une composante de déplacement (A) peut être conférée dans la direction de la série sur un côté d'une zone de remontée (30) de l'air de traitement (29) et qu'une composante de déplacement (B) dans la direction opposée puisse être conférée de l'autre côté de la zone de remontée (30).

22. Ensemble selon l'une des revendications 19 à 21, **caractérisé en ce que** les éléments (70) de guidage d'air sont configurés comme doigts de guidage (72) disposés entre les plaques de guidage (22, 24) et aptes à pivoter autour d'un axe supérieur (74), relié à un élément commun d'ajustement (80, 82) dont le coulissement a pour effet un pivotement commun des doigts de guidage (72).

23. Ensemble selon l'une des revendications 20 à 22, **caractérisé en ce que** les éléments (70) de guidage d'air situés sur un côté de la zone de remontée (30) peuvent être ajustés indépendamment des éléments (70) de guidage d'air situés sur le côté opposé.

24. Ensemble selon la revendication 23, **caractérisé en ce que** la commande de l'ajustement des éléments (70) de guidage d'air est configurée de telle sorte que lorsque des modules de puissance (12) voisins sont agencés en série, leurs commandes puissent être accouplées les unes aux autres.
